# EUROPÄISCHE PATENTANMELDUNG

(11) **EP 2 653 303 A1**
(43) Veröffentlichungstag der Anmeldung: **23.10.2013**
(21) Anmeldenummer: 13001964.9
(22) Anmeldetag: 15.04.2013
(51) Int. Cl.: B32B 7/06, B29C 63/02, G02B 27/00

(54) **Schutzfolie zum Aufbringen auf ein Display und Set zum Aufbringen einer Schutzfolie auf ein Display**

(30) Priorität: 16.04.2012 DE 102012007424; 20.12.2012 DE 102012024899
(71) Anmelder: Tormaxx GmbH, 41199 Mönchengladbach (DE)
(72) Erfinder: Koch, Hubert, 41199 Monchengladbach (DE)
(74) Vertreter: Patentanwaltskanzlei Liermann-Castell & Kollegen

(57) **Zusammenfassung**

Die Erfindung betrifft eine Schutzfolie (6, 31) zum Aufbringen auf einen Display (11) mit einer Display-Folie (12, 32) und einer Folienschutzschicht (10, 33) sowie ein Set zum Aufbringen einer Schutzfolie auf ein Display insbesondere mit einer erfindungsgemäßen Schutzfolie.

## Beschreibung

Die Erfindung betrifft eine Schutzfolie zum Aufbringen auf ein Display mit einer Display-Folie und einer Folienschutzschicht und ein Set zum Aufbringen einer Schutzfolie auf ein Display.

Solche Schutzfolien sind aus dem Stand der Technik zahlreich bekannt. Problematisch sind jedoch sowohl das erstmalige Ablösen der Folienschutzschicht ebenso wie ein blasenfreies Aufbringen der Display-Folie.

Die Aufgabe der vorliegenden Erfindung ist es, solche aus dem Stand der Technik bekannten Schutzfolien zu verbessern.

Diese Aufgabe wird nach einem ersten Aspekt der Erfindung dadurch gelöst, dass die Folienschutzschicht eine Abziehhilfe in Form einer Lasche aufweist. So können die Folienschutzschicht und die Display-Folie leichter voneinander getrennt werden, da die Lasche leichter zu greifen ist. Die Folienschutzschicht schützt die Seite der Display-Folie, die auf das Display aufgebracht wird. Die Display-Folie kann eine zweite Folienschutzschicht auf der im aufgebrachten Zustand der Display-Folie abgewandten Seite aufweisen.

Vorteilhafterweise ist die Lasche ein reißfester Folienstreifen. Durch die Verwendung eines Folienmaterials für die Lasche ist eine gemeinsame Verarbeitung möglich. Durch die hohe Reißfestigkeit des Folienmaterials wird ein Abreißen der Lasche verhindert.

Vorzugsweise weist die Lasche eine kreisrunde Öffnung zum Einhängen einer Abziehhilfe auf. Bei einer Abziehhilfe kann es sich beispielsweise um einen Faden handeln. Dieser kann durch das Loch gezogen werden und zur Befestigung entsprechend auf doppelter Länge geführt, verklebt oder verknotet werden. Alternativ kann es sich bei der Abziehhilfe auch um ein im Wesentlichen stab- oder löffelförmig ausgestaltetes Kunststoffteil handeln, welches einen Kopfteil, einen Mittelteil und einen Griffteil aufweisen kann. Hierbei ist der Kopfteil vorzugswürdig so ausgebildet, dass dieser formschlüssig in die Öffnung der Lasche eingreift. Vorzugsweise ist die Öffnung kreisförmig, aber auch andere Öffnungsformen, wie beispielsweise eine quadratische, rechtwinklige oder ovale Form oder eine Schlitzform sind denkbar. Die kreisrunde Öffnung ist vorteilhaft, da die Abziehhilfe so drehbar in der Lasche verankert werden kann.

Weiter vorteilhaft ist, wenn die Lasche trapezförmig ist. Die Lasche kann beispielsweise mit der Folienschutzschicht einstückig ausgeführt sein oder auf diese aufgeklebt sein. Gegenüber einer beispielsweise auch möglichen rechteckigen Form hat die Trapezform den Vorteil, dass im oberen Bereich des Trapezes Material gespart werden kann. Wird die Lasche aufgeklebt, hat die Trapezform beim Aufkleben der breiteren Seite des Trapezes den Vorteil, dass trotz Materialeinsparung weiterhin eine große Klebefläche vorhanden ist.

Weiter vorzugsweise ist die Lasche mittig an der Folienschutzschicht angebracht. So wird ein gleichmäßig parallel zu der Außenkante verlaufendes Abziehen und Anhaften möglich. Es ist jedoch auch eine Anbringung in einer der Ecken denkbar, sodass die Schutzfolie von dieser Ecke beginnend teilweise schräg abgezogen werden kann.

Von Vorteil ist, wenn die Lasche eine Länge von 2 bis 8 Zentimetern, vorzugsweise von 5 Zentimetern aufweist. In dieser Größenordnung ist es noch möglich, die Folie und die Lasche maschinell zu produzieren.

Alternativ ist es vorteilhaft, wenn die Lasche länger ist, als die Folie an der Befestigungsstelle der Lasche breit ist. So ist es möglich, direkt an der Lasche selbst beim Abziehen der Folienschutzschicht zu ziehen.

Ein circa 0,5 cm bis 3 cm breiter Streifen der Folienschutzschicht kann umgeklappt sein und die freiliegende Display-Folie mit einem Abdeckband gesichert sein. Vorteilhafterweise steht das Abdeckband an einer Seite über. Die Lasche kann an dem umgeklappten Stück der Folienschutzschicht befestigt sein.

Ein zweiter Aspekt der Erfindung betrifft ein Set zum Aufbringen einer Schutzfolie auf ein Display, wobei es eine erfindungsgemäße Schutzfolie aufweist. Neben der Schutzfolie kann das Set weitere Bestandteile beinhalten, die ein Aufbringen der Schutzfolie erleichtern oder den Verkauf vereinfachen. Dies kann beispielsweise eine Verpackung oder eine Gebrauchsanweisung sein.

Von Vorteil ist, wenn das Set eine Abziehhilfe aufweist. Hierbei kann es sich insbesondere um die bereits beschriebene stab- oder löffelförmige Vorrichtung handeln.

Vorteilhafterweise ist die Abziehhilfe länger als die Folie an der Befestigungsstelle in Abziehrichtung breit ist. So kann die Abziehhilfe während des Abziehens der Folienschutzschicht leicht gegriffen werden, da sie unter der Display-Folie herausragt.

Weiter von Vorteil ist, wenn das Set vier Gummipunkte aufweist. Diese können an den Ecken der Unterseite des elektronischen Geräts, an welchem die Schutzfolie auf das Display aufgebracht werden soll, befestigt werden. So wird dieses während des Aufbringens der Folie gegen statische Aufladung durch eine Trennung gegenüber der Unterlage wie beispielsweise der leitenden Oberfläche eines Tisches isoliert.

Weiter von Vorteil ist, wenn das Set eine Antistatikrakel aufweist. Durch diesen können selbst kleinste Staubpartikel entfernt werden.

Weiter von Vorteil ist, wenn das Set eine Befestigungsrakel aufweist. Vorteilhafterweise weisen beide Rakel eine konkave Form auf. Insbesondere vorteilhaft ist, wenn eine Ecke einen 90°-Winkel aufweist, während eine andere Ecke abgerundet ist. Mit der rechtwinkligen Ecke ist es möglich, bis in den Randbereich zu rakeln, wohingegen mit der abgerundeten Ecke leichter Luftblasen zwischen Display und Schutzfolie hinausgedrückt werden können. Vorzugsweise weisen die Rakel im oberen Bereich eine Struktur beispielsweise in Form von einer oder zwei Leisten auf, die als Griff dienen kann. Die Größe der Rakel kann dabei an die Displaygröße angepasst werden. Von Vorteil ist, wenn Antistatikrakel und Befestigungsrakel unterschiedliche Farben aufweisen, um vom Benutzer leicht unterschieden werden zu können.

Weiter von Vorteil ist, wenn das Set ein Mikrofasertuch aufweist. Durch dieses kann das Display in einem vorgelagerten Schritt, vor dem Aufbringen der Folie gereinigt werden.

Weiter von Vorteil ist, wenn das Set Handschuhe aufweist, da so Verschmutzungen durch die Hände des Benutzers ausgeschlossen werden können.

Die Erfindung wird nachfolgend anhand von Ausführungsbeispielen unter Bezugnahme auf die Zeichnungen näher erläutert.

Hierin zeigt:
- Figur 1: die einzelnen Schritte A bis E zum Aufbringen einer Schutzfolie auf ein Display,
- Figur 2: eine schematische Darstellung einer Lasche und
- Figur 3: eine schematische Darstellung einer Schutzfolie mit einer Abziehhilfe in Draufsicht (A) und Untenansicht (B).

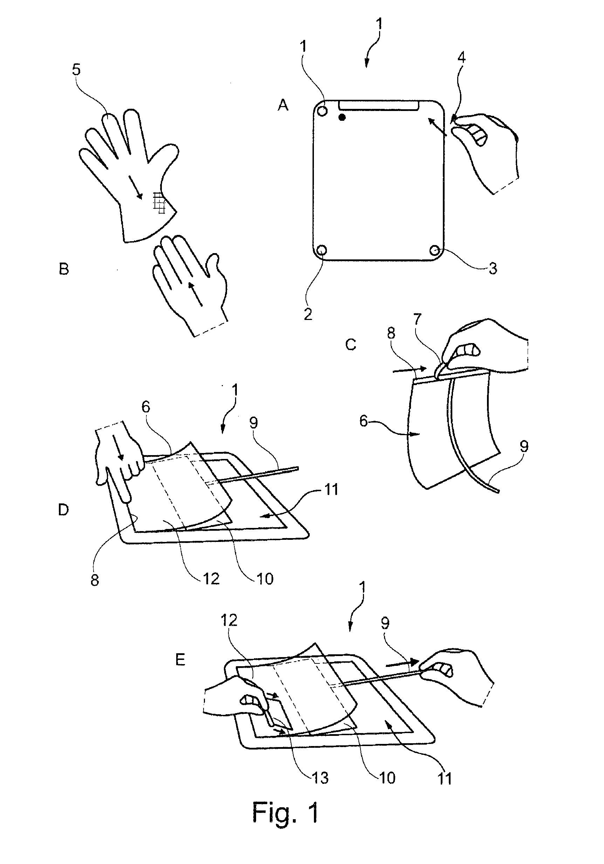

In einem ersten Schritt (Figur 1A) werden an einem technischen Gerät 1, welches ein Display (nicht sichtbar, da auf der Oberseite) aufweist, vier Klebefüße 1, 2, 3, 4, an den Ecken der Unterseite aufgebracht.

In einem nächsten Schritt (Figur 1B) sollten Handschuhe wie der Handschuh 5 angezogen werden.

In einem weiteren Schritt (Figur 1C) wird zunächst ein oberer Bereich der Schutzfolie 6 durch Abziehen eines Folienstreifens 7 der Folienschutzschicht 10 freigelegt. Die Folie wird passgenau auf das Display 11 aufgelegt. Als Nächstes wird die Folie mittels des durch den Folienstreifen freigelegten Bereichs 8 der Display Folie 12 auf dem Gerät 1 fixiert. Sodann wird die Folienschutzschicht 10 mittels einer Lasche als Abziehhilfe 9 abgezogen. Währenddessen kann die auf dem Display verbleibende Display-Folie 12 mit einer Rakel 13 angerakelt werden.

Vor dem Aufbringen kann das Display 11 mit einem Mikrofasertuch gereinigt werden und eventuell noch verbleibende Stoffreste und Fuseln des Mikrofasertuchs mit einer Antistatikrakel endgültig entfernt werden.

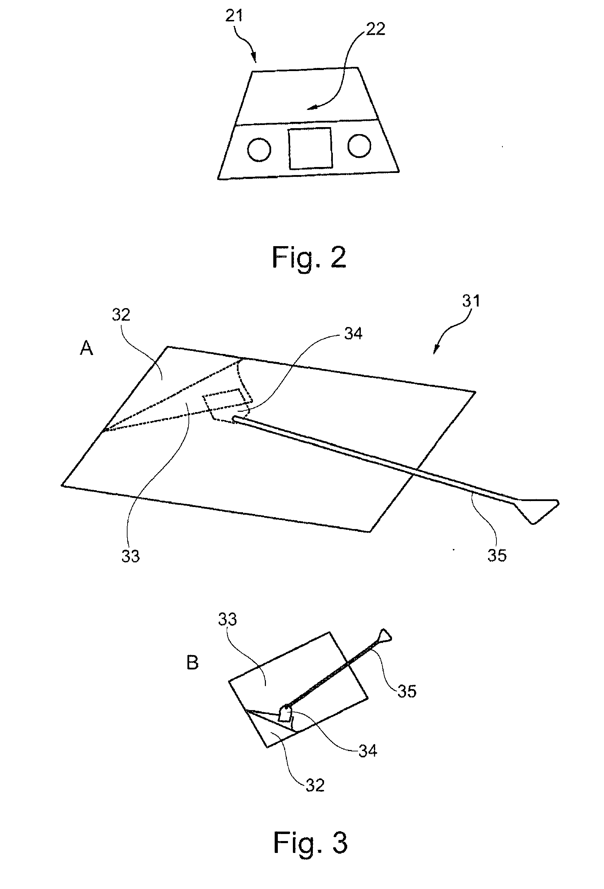

Die Befestigung der Abziehhilfe kann durch eine Lasche 21, wie in Figur 2 abgebildet, erfolgen. Diese ist trapezförmig und wird im unteren breiteten Bereich auf die Folie aufgeklebt. Sie weist eine kreisrunde Öffnung 22 auf, durch die beispielsweise ein Bändchen geführt werden kann, in die aber auch eine Abziehhilfe formschlüssig eingreifen kann.

Eine Schutzfolie mit einer solchen Abziehhilfe ist in Figur 3 abgebildet. Die Schutzfolie 31 weist eine Display-Folie 32 und eine Folienschutzschicht 33 auf. An der Folienschutzschicht 33 ist eine Lasche 34 befestigt. In diese greift die Abziehhilfe 35 ein. Mit dieser Abziehhilfe kann schließlich die Schutzfolie 33 vollständig entfernt werden.

Hierfür bietet sich folgendes Vorgehen an. Erneut werden Klebefüße an den Ecken der Unterseite des Gerätes befestigt. In einem nächsten Schritt wird das Display gründlich mit einem Mikrofasertuch gereinigt. In einem weiteren Schritt wird ein Antistatikrakel ohne Druck über das Display geführt, um selbst kleinste Staubpartikel zu beseitigen. In einem weiteren Schritt wird ein Bereich der Folienschutzschicht durch Abrollen derselben über den Daumen von der Display-Folie abgetrennt. Dieser Bereich sollte etwa 1 cm bis 1,5 cm betragen. In einem nächsten Schritt wird dann die Abziehhilfe in das vorgestanzte Loch des Etiketts eingeführt. Daraufhin kann die Schutzfolie in dem abgezogenen Bereich abgeknickt werden. Schließlich kann die Folie komplett auf das Display abgelegt werden, ohne dort fixiert zu sein. Die Folie kann so ausgerichtet werden, wobei die Aussparung für Lautsprecher und gegebenenfalls Kamera als Orientierungshilfe dienen.

Nun wird der freigelegte Bereich der Display-Folie durch leichten Fingerdruck auf dem Display fixiert. Die Folie wird in diesem Bereich gehalten und die Schutzfolie mit der nach unten unter der Display-Folie herausragenden Abziehhilfe langsam und gleichmäßig abgezogen. Schließlich können mit einem zweiten Befestigungsrakel Luftbläschen ausgestrichen werden. Eine eventuell auf der anderen Seite der Display-Folie aufgebrachte weitere Schutzfolie kann abschließend komplett entfernt werden. Schließlich müssen noch die Klebefüße von der Rückseite des Gerätes ebenfalls wieder entfernt werden.

## Patentansprüche

1. Schutzfolie zum Aufbringen auf ein Display mit einer Display-Folie und einer Folienschutzschicht, ***dadurch gekennzeichnet, dass*** die Folienschutzschicht eine Abziehhilfe in Form einer Lasche aufweist.

2. Schutzfolie nach Anspruch 1, ***dadurch gekennzeichnet, dass*** die Lasche ein reißfester Folienstreifen ist.

3. Schutzfolie nach einem der Ansprüche 1 oder 2, ***dadurch gekennzeichnet, dass*** die Lasche eine kreisrunde Öffnung zum Einhängen einer Abziehhilfe aufweist.

4. Schutzfolie nach einem der vorhergehenden Ansprüche, ***dadurch gekennzeichnet, dass*** die Lasche trapezförmig ist.

5. Schutzfolie nach einem der vorhergehenden Ansprüche, ***dadurch gekennzeichnet, dass*** die Lasche mittig an der Folienschutzschicht angebracht ist.

6. Schutzfolie nach einem der vorhergehenden Ansprüche, ***dadurch gekennzeichnet, dass*** die Lasche eine Länge von 2 bis 8 cm vorzugsweise von 5 cm aufweist.

7. Schutzfolie nach einem der Ansprüche 1 bis 5, ***dadurch gekennzeichnet, dass*** die Lasche länger ist als die Folie an der Befestigungsstelle der Lasche breit ist.

8. Set zum Aufbringen einer Schutzfolie auf ein Display, ***dadurch gekennzeichnet, dass*** es eine Schutzfolie insbesondere nach einem der Ansprüche 1 bis 7 aufweist.

9. Set nach Anspruch 8, ***dadurch gekennzeichnet, dass*** es eine Abziehhilfe aufweist.

10. Set nach Anspruch 9, ***dadurch gekennzeichnet, dass*** die Abziehhilfe länger ist als die Folie an der Befestigungsstelle in Abziehrichtung breit ist.

11. Set nach einem der Ansprüche 8 bis 10, ***dadurch gekennzeichnet, dass*** es vier Gummipunkte aufweist.

12. Set nach einem der Ansprüche 8 bis 11, ***dadurch gekennzeichnet, dass*** es eine Antistatikrakel aufweist.

13. Set nach einem der Ansprüche 8 bis 12, ***dadurch gekennzeichnet, dass*** es eine Befestigungsrakel aufweist.

14. Set nach einem der Ansprüche 8 bis 13, ***dadurch gekennzeichnet, dass*** es ein Mikrofasertuch aufweist.

15. Set nach einem der Ansprüche 8 bis 14, ***dadurch gekennzeichnet, dass*** es Handschuhe aufweist.
